# EUROPEAN PATENT SPECIFICATION

(11) **EP 2 333 392 B1**
(45) Date of publication and mention of the grant of the patent: **01.05.2013**
(21) Application number: 10194297.7
(22) Date of filing: 09.12.2010
(51) Int. Cl.: F16L 59/02, F16L 59/08, F16L 59/14, B32B 1/08, B32B 15/08, B32B 15/14, B32B 15/20, B32B 19/04, B32B 27/32

(54) **Pipe section closing mechanism and its manufacturing method**
Mechanismus zum Schließen eines Röhrenabschnitts und Verfahren zu seiner Herstellung
Mécanisme de fermeture de section de tuyau et son procédé de fabrication

(30) Priority: 11.12.2009 FI 20096309
(43) Date of publication of application: 15.06.2011
(73) Proprietor: Paroc Oy Ab, 00180 Helsinki (FI)
(72) Inventor: Hjelt, Tuomo, 53850 Lappeenranta (FI)
(74) Representative: LEITZINGER OY

(56) References cited:
- WO-A1-96/37728
- WO-A2-2005/105430
- DE-U1- 8 911 479
- FR-A1- 2 831 645
- US-A- 3 614 967

## Description

### Object of the invention

The invention relates to a closing mechanism of a lap of aluminum foil coating intended for covering and simultaneously closing a split in an aluminum foil coated pipe section of mineral wool for insulating purposes. The aluminum foil coating has its mineral wool facing surface provided with a polyethylene layer by which the aluminum foil coating is attached to the outer layer of the mineral wool pipe section. The polyethylene layer of the lap of aluminum foil coating is provided with a double-sided tape for attaching the lap of aluminum foil coating to the aluminum foil coating on the other side of the pipe section split.

The invention relates also to a method for the manufacture of a closing mechanism of a lap of aluminum foil coating intended for covering and simultaneously closing a split in an aluminum foil coated pipe section of mineral wool for insulation purposes. The aluminum foil coating has on its mineral wool facing surface a polyethylene layer for attaching the aluminum foil coating to the outer layer of the mineral wool pipe section. The polyethylene layer of the lap of aluminum foil coating is provided with a double-sided tape for attaching the lap of aluminum foil coating to the aluminum foil coating on the other side of the pipe section split.

### Prior art

Pipe sections used for insulation purposes feature a lengthwise split for installation. After installation, the split is covered by an unsupported lengthwise lap of pipe section coating, said lap sticking out from the region of one edge of the split. In pipe sections, whose coating comprises aluminum foil, the lap of coating is traditionally closed by using a double-sided tape, having an adhesive agent with different bonding capabilities on different sides of the tape. For the sealing mechanism, a double-sided band tape is selected and cut to a lap-matching size. The release paper covering one side of the band tape is removed, followed by gluing the band tape to the attachment with the mineral wool facing surface of the lap of aluminum foil coating. The other side of the band tape is still left with release paper. On a pipe section installation site, after the pipe section has been installed, the other release paper of the band tape is removed, followed by gluing the lap of aluminum foil to the attachment with the coating surface on the other side of a split in the mineral wool pipe section.

The double-sided tapes used in aluminum foil coated pipe sections are generally acrylic-, rubber- or hot-setting adhesive based tapes. The amount of tape needed for attachment is about 100 g/m². These double-sided tapes consist of two adhesive layers, as well as a supporting carrier layer therebetween. A notable example of this type of double-sided tape is a tape, wherein the carrier layer is a PET or polyester film, the adhesive layer for attachment to an aluminum foil surface consists of an adhesive agent which is designed for bonding at temperatures even as low as -18°C, and the adhesive layer for attachment to a polyethylene layer consists of an adhesive agent which is designed for bonding to plastics with a low surface energy. In prior known solutions, the adhesive layer bonding to an aluminum foil surface is for example an acrylic adhesive, and the adhesive layer bonding to a polyethylene layer is e.g. a modified acrylic adhesive.

The foregoing double-sided tapes, included in the prior art, are basically workable solutions, yet have their drawbacks. Firstly, the use of a separate carrier layer (e.g. a PET film) leads to an increased fire load. Secondly, the use of both a carrier layer and two different adhesive agents represents extra costs and also an extra fire load, the elimination of both being desirable.

In the international publication WO 96/37728 is disclosed a method of insulating a pipe with a tubular sheathing, which comprises a tubular member of bonded mineral fibres and a sheet material attached by gluing to the tubular member. The tubular member is provided with a first throughgoing cutting zone, i.e. a slit, and the sheet material has an extension which after mounting of the tubular sheathing on a pipe serves as overlapping said slit. The extension of the sheet material is e.g. provided with a self-adhesive glue strip. WO 96/37728 does not involve the use of a polyethylene layer between the outer surface of a pipe section of e.g. mineral wool and an aluminium foil coating and the attachment of a double sided adhesive tape to a polyethylene layer on the one hand, and the aluminium foil coating on the other hand.

### Description of the invention

It is an object of the invention to overcome the foregoing problems and to provide a more cost efficient sealing mechanism with lower fire load for an unsupported lap of aluminum foil coating for a pipe section.

The closing mechanism according to the invention is characterized in that the double-sided tape has on both sides the same adhesive composition, and that one side of the tape is attached to the polyethylene layer present on the inside of the lap of aluminum foil coating while the polyethylene layer is in a molten state.

In one preferred embodiment for a closing mechanism of the invention, the tape consists of just one single material layer in the form of a band. In another preferred embodiment for a closing mechanism of the invention, the adhesive composition only contains one single adhesive agent. What is particularly beneficial is that the employed one single material layer and one single adhesive agent comprise a solvent-based acrylic adhesive.

In a second preferred embodiment, the material layer may preferably be e.g. a composite material in the form of a band made up of a rubber-based material and one or more adhesive agents.

On the other hand, the closing mechanism manufacturing method according to the invention is characterized in that the mineral wool facing polyethylene layer of the lap of aluminum foil coating is brought to a molten state, and one side of the double-sided tape, having the same adhesive composition on both sides thereof, is attached to the lap's polyethylene layer when said layer is in a molten state.

In one preferred embodiment for a closing mechanism manufacturing method of the invention, the attachment of a tape is performed by pressing the tape to an attachment with the polyethylene layer of the lap of aluminum foil at the same time as the aluminum foil, already secured to a mineral wool pipe section, is cut at the end that forms said lap of aluminum foil for the mineral wool pipe section, and the polyethylene layer present therein is melted.

The invention enables reducing the total fire load (or: total amount of combustible matter) for the reason that the closing mechanism of the invention involves the use of just one single adhesive agent, nor has it a carrier layer at all, thus enabling a lesser total mass.

### Detailed description of the invention

The invention will now be described by way of example with reference to the accompanying drawings, in which:
- fig. 1: shows a cross-section of a pipe section, the unsupported lap of whose aluminum foil coating is attached and closed by means of a double-sided tape,
- fig. 2: shows a schematic cross-section view of a prior art unsupported lap provided with a double-sided three layer tape,
- fig. 3: shows a schematic cross-section view of a tape according to the invention, and its attachment to an unsupported lap, and
- fig. 4: represents a test arrangement used for testing the tensile strengths of closing mechanisms according to the invention and the prior art.

In the following examples, the mineral wool, employed both in pipe sections of the prior art and those of the invention, comprises stone wool.

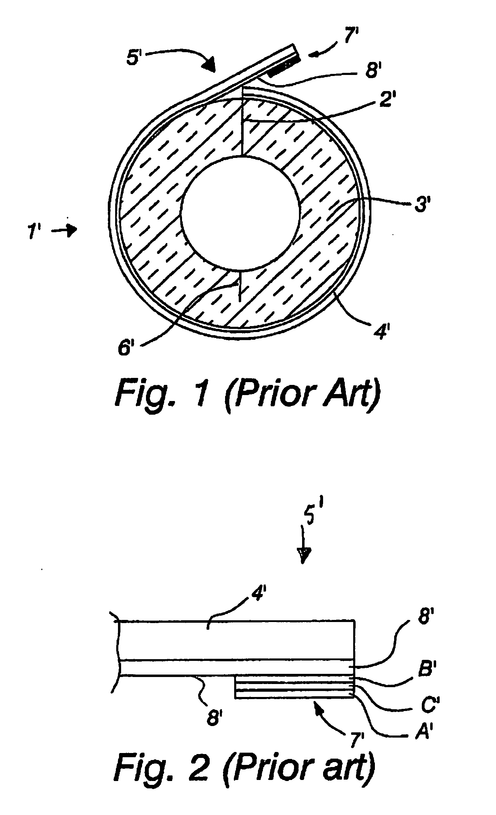

A pipe section 1' for insulation purposes, depicted in fig. 1 and included in the prior art, comprises for installation purposes a lengthwise split 2' extending from end to end of the pipe section in a stone wool layer 3'. The pipe section 1' has an outer surface of its substantially tubular stone wool layer 3' provided with an aluminum foil coating 4, having its stone wool facing surface coated with a polyethylene layer (PE) 8'. By melting the polyethylene layer, the coating 4' is attached to the outer cylindrical main surface of the stone wool layer so as to substantially cover this said entire outer surface in such a way that, on one side of the split 2', it extends essentially to flushness with a plane of that perpendicular end section of the split tubular stone wool layer 3' to which it is attached, while on the other side of the split 2', it extends from the edge of the stone wool layer's 3' perpendicular split 2' or from the vicinity thereof in the form of an unsupported lap 5' (may also be referred to as a skirt) extending lengthwise of the pipe section from its end to end. Inside the stone wool layer 3' is a lengthwise internal slit 6' extending from end to end of the pipe section.

To the polyethylene layer 8' on the unsupported lap 5' of the aluminum foil coating 4' of the prior art pipe section 1' shown in fig. 1 is attached a double-sided band tape 7' extending along a longitudinal edge of the unsupported lap (i.e. along the length of the pipe section). The double-sided tape used in a closing mechanism of the prior art is depicted in fig. 2, and it consists of three discrete layers: adhesive layers A' and B', as well as a carrier layer C' therebetween. The adhesive layer A' has such a bonding capability of sticking and attaching well to an aluminum foil surface even at low temperatures, while the adhesive layer B' has such a bonding capability of attaching well to very low energy plastic surfaces, such as polyethylene. The carrier layer C' consists of e.g. a polyester film (PET film).

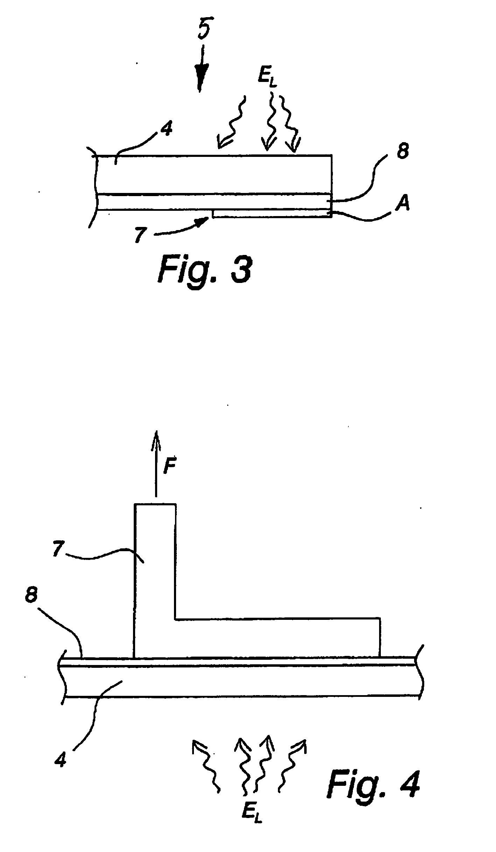

Fig. 3 illustrates a double-sided tape 7 for a closing mechanism of the invention in attachment with the internal polyethylene layer 8' on the aluminum foil coating 4' of the otherwise prior representing pipe section 1' (a prior known pipe section is shown in fig. 1). The double-sided tape 7 according to the invention is preferably made up of just one single material layer A, which is established by a solvent-based acrylic adhesive in the form of a band, such as e.g. the acrylic adhesive present on a sealed side of the double-sided PET tape TR4049G sold by Stokvis Tapes Sverige AB, which is capable of adhering at temperatures even as low as -18°C. The liner employed for acrylic adhesive surfaces can be any appropriate liner known to a person skilled in the art, such as e.g. a silicone coated paper.

The double-sided tape 7 of a closing mechanism according to the invention is attached to a stone wool facing polyethylene layer of the lap 5 of aluminum foil coating 4 while the polyethylene layer is in a molten state. Preferably, the attachment is performed by pressing the tape to an engagement with the polyethylene layer of the lap of aluminum foil at the same time as the aluminum foil, already secured to a stone wool pipe section, is cut at the end forming a lap of aluminum foil for the discussed stone wool pipe section, and a polyethylene layer included therein is melted.

Once the pipe section 1' is installed around a pipe, the split 2' is covered by the unsupported lap 5' of the pipe section's aluminum foil coating 4' by first peeling off the liner of the double-sided tape 7 according to the invention, and by then pressing the unsupported coating lap 5' to the attachment with the underlying aluminum foil coating 4' on the other side of the split 2'.

In table 1 below are shown results of tensile strength tests for a tape (samples 6-10) sealed to the polyethylene surface of an aluminum laminate in a molten state, and for a tape (samples 1-5) sealed to the polyethylene surface of an aluminum laminate in a solid state.

**Table 1: tensile strength test**

| **Tape¹ +** | | | | | | | **F(N) average** |
|---|---|---|---|---|---|---|---|
| **PE** | **Sample** | **1** | **2** | **3** | **4** | **5** | |
| | F(N) | 8 | 7 | 7 | 7 | 6 | 7 |

| **Tape¹** | | | | | | | |
|---|---|---|---|---|---|---|---|
| **+melted** | **Sample** | **6** | **7** | **8** | **9** | **10** | |
| **PE** | F(N) | 11 | 11 | 10 | 10 | 10 | 10 |

| | | | | | | | |
|---|---|---|---|---|---|---|---|
| ¹. Transfer type tape, which consists of just one layer of acrylic adhesive. | | | | | | | |

Conclusion: adherence improves by about 50% as the polyethylene (EP) of an aluminum laminate's unsupported lap is melted against the tape.

The test arrangement used for tests presented in table 1 is shown in fig. 4.

## Claims

1. A closing mechanism of a lap (5', 5) of aluminum foil coating intended for covering and simultaneously closing a split (2', 2) in a mineral wool pipe section (1', 1) provided with an aluminum foil coating (4', 4), said aluminum foil coating having its mineral wool facing surface provided with a polyethylene layer (8', 8) by which the aluminum foil coating (4', 4) is attached to the outer layer of the mineral wool pipe section, the polyethylene layer (8', 8) of the lap of aluminum foil coating being provided with a double-sided tape (7', 7) for attaching the lap (5', 5) of aluminum foil coating to the aluminum foil coating (4', 4) on the other side of the pipe section split, **characterized in that** the double-sided tape (7) has on both sides the same adhesive composition, and that one side of the tape is attached to the polyethylene layer (8) present on the inside of the lap (5) of aluminum foil coating (4) while the polyethylene layer is in a molten state.

2. A closing mechanism according to claim 1, wherein the tape (7) consists of one single material layer in the form of a band.

3. A closing mechanism according to claim 2, wherein the adhesive composition contains one single adhesive agent.

4. A closing mechanism according to claim 3, wherein the employed one single material layer and one single adhesive agent comprise a solvent-based acrylic adhesive.

5. A closing mechanism according to claim 2, wherein the material layer is a composite material in the form of a band made up of a rubber-based material and one or more adhesive agents.

6. A method for the manufacture of a closing mechanism of a lap (5', 5) of aluminum foil coating intended for covering and simultaneously closing a split (2', 2) in an aluminum foil coated (4', 4) pipe section (1', 1) of mineral wool, said aluminum foil coating (4', 4) having on its mineral wool facing surface a polyethylene layer (8', 8) by which the aluminum foil coating is attached to the outer layer of the mineral wool pipe section, the polyethylene layer of the lap of aluminum foil coating being provided with a double-sided tape (7', 7) for attaching the lap of aluminum foil coating to the aluminum foil coating (4', 4) on the other side of the pipe section split, **characterized in that** the mineral wool facing polyethylene layer (8) of the lap (5) of aluminum foil coating (4) is brought to a molten state, and one side of the double-sided tape (7), having the same adhesive composition on both sides thereof, is attached to said lap's polyethylene layer (8) when said layer is in a molten state.

7. A method according to claim 6, **characterized in that** the attachment is performed by pressing the tape (7) to an attachment with the polyethylene layer (8) lap (5) of aluminum foil coating at the same time as the aluminum foil coating (4), already secured to the mineral wool pipe section, is cut at the end that forms said lap of aluminum foil coating of the mineral wool pipe section, and the polyethylene layer present thereon is melted.

## Patentansprüche

1. Verschlussmechanismus für eine Lasche (5', 5) aus einer Aluminiumfolienbeschichtung, die zum Abdecken und gleichzeitigen Verschließen eines Schlitzes (2', 2) in einem Mineralwolle-Röhrenabschnitt (1', 1) vorgesehen ist, der mit einer Aluminiumfolienbeschichtung (4', 4) ausgestattet ist, wobei die der Mineralwolle zugewandte Fläche der Aluminiumfolienbeschichtung mit einer Polyethylenschicht (8', 8) ausgestattet ist, durch welche die Aluminiumfolienbeschichtung (4', 4) an der Außenschicht des Mineralwolle-Röhrenabschnitts angebracht ist, wobei die Polyethylenschicht (8', 8) der Lasche aus Aluminiumfolienbeschichtung mit einem doppelseitigen Klebeband (7', 7) ausgestattet ist, um die Lasche (5', 5) aus Aluminiumfolienbeschichtung an der Aluminiumfolienbeschichtung (4', 4) an der anderen Seite des Röhrenabschnittschlitzes anzubringen, **dadurch gekennzeichnet, dass** das doppelseitige Klebeband (7) auf beiden Seiten die gleiche Klebstoffzusammensetzung aufweist und dass eine Seite des Klebstoffbandes an der Polyethylenschicht (8) angebracht wird, die an der Innenseite der Aluminiumfolienbeschichtung (4) der Lasche (5) vorhanden ist, während sich die Polyethylenschicht in geschmolzenem Zustand befindet.

2. Verschlussmechanismus nach Anspruch 1, wobei das Klebeband (7) aus einer einzigen Materialschicht in Form eines Bandes besteht.

3. Verschlussmechanismus nach Anspruch 2, wobei die Klebstoffzusammensetzung ein einziges Klebemittel enthält.

4. Verschlussmechanismus nach Anspruch 3, wobei die verwendete einzige Materialschicht und das verwendete einzige Klebemittel einen Acrylklebstoff auf Lösemittelbasis umfassen.

5. Verschlussmechanismus nach Anspruch 2, wobei die Materialschicht ein Verbundmaterial in Form eines Bandes ist, das aus einem auf Kautschuk basierenden Material und einem oder mehreren Klebemitteln hergestellt ist.

6. Verfahren zur Herstellung eines Verschlussmechanismus für eine Lasche (5', 5) aus einer Aluminiumfolienbeschichtung, die zum Abdecken und gleichzeitigen Verschließen eines Schlitzes (2', 2) in einem mit einer Aluminiumfolienbeschichtung (4', 4) ausgestatteten Röhrenabschnitt (1', 1) aus Mineralwolle vorgesehen ist, wobei die der Mineralwolle zugewandte Fläche der Aluminiumfolienbeschichtung(4', 4) eine Polyethylenschicht (8', 8) aufweist, durch welche die Aluminiumfolienbeschichtung an der Außenschicht des Mineralwolle-Röhrenabschnitts angebracht ist, wobei die Polyethylenschicht der Lasche aus Aluminiumfolienbeschichtung mit einem doppelseitigen Klebeband (7' , 7) ausgestattet ist, um die Lasche aus Aluminiumfolienbeschichtung an der Aluminiumfolienbeschichtung (4', 4) an der anderen Seite des Röhrenabschnittschlitzes anzubringen, **dadurch gekennzeichnet, dass** die der Mineralwolle zugewandte Polyethylenschicht (8) der Lasche (5) der Aluminiumfolienbeschichtung (4) in einen geschmolzenen Zustand gebracht wird und eine Seite des doppelseitigen Klebebandes (7), das auf seinen beiden Seiten die gleiche Klebstoffzusammensetzung aufweist, an der Polyethylenschicht (8) der Lasche abgebracht wird, wenn sich die Schicht in einem geschmolzenen Zustand befindet.

7. Verfahren nach Anspruch 6, **dadurch gekennzeichnet, dass** das Anbringen durch Pressen des Klebstoffbandes (7) zu einer Anbringung an der Polyethylenschicht (8) der Lasche (5) aus Aluminiumfolienbeschichtung zum gleichen Zeitpunkt ausgeführt wird, zu dem die bereits am Mineralwolle-Röhrenabschnitt angebrachte Aluminiumfolienbeschichtung (4) an dem Ende geschnitten wird, das die Lasche aus Aluminiumfolienbeschichtung des Mineralwolle-Röhrenabschnitts bildet, und zu dem sich die daran befindliche Polyethylenschicht in geschmolzenem Zustand befindet.

## Revendications

1. Mécanisme de fermeture d'un recouvrement (5', 5) en revêtement en film d'aluminium destiné à couvrir et à fermer en même temps une fente (2', 2) dans une section de tuyau en laine minérale (1', 1) pourvue d'un revêtement en film d'aluminium (4', 4), ledit revêtement en film d'aluminium ayant sa surface faisant face à la laine minérale pourvue d'une couche de polyéthylène (8', 8) par laquelle le revêtement en film d'aluminium (4', 4) est fixé à la couche extérieure de la section de tuyau en laine minérale, la couche de polyéthylène (8', 8) du recouvrement en revêtement en film d'aluminium étant pourvue d'un ruban double face (7', 7) permettant de fixer le recouvrement (5, 5') en revêtement en film d'aluminium (4', 4) sur l'autre côté de la fente de la section de tuyau, **caractérisé en ce que** le ruban double face (7) a sur ses deux faces la même composition adhésive et qu'une face du ruban est fixée à la couche de polyéthylène (8) présente sur l'intérieur du recouvrement (5) en revêtement en film d'aluminium (4) pendant que la couche de polyéthylène est en état fondu.

2. Mécanisme de fermeture selon la revendication 1, dans lequel le ruban (7) consiste en une couche unique de matériau ayant la forme d'une bande.

3. Mécanisme de fermeture selon la revendication 2, dans lequel la composition adhésive contient un seul agent adhésif.

4. Mécanisme de fermeture selon la revendication 3, dans lequel la couche unique de matériau utilisée comprend un adhésif acrylique à base de solvant.

5. Mécanisme de fermeture selon la revendication 2, dans lequel la couche de matériau est un matériau composite ayant la forme d'une bande constituée d'un matériau à base de caoutchouc et d'un ou plusieurs agents adhésifs.

6. Procédé de fabrication d'un mécanisme de fermeture d'un recouvrement (5', 5) en revêtement en film d'aluminium destiné à couvrir et à fermer en même temps une fente (2', 2) dans une section de tuyau (1', 1) en laine minérale revêtue d'un film d'aluminium (4' , 4), ledit revêtement en film d'aluminium (4', 4) ayant sa surface faisant face à la laine minérale pourvue d'une couche de polyéthylène (8', 8) par laquelle le revêtement en film d'aluminium est fixé à la couche extérieure de la section de tuyau en laine minérale, la couche de polyéthylène du recouvrement en revêtement en film d'aluminium étant pourvue d'un ruban double face (7', 7) permettant de fixer le recouvrement en revêtement en film d'aluminium (4', 4) sur l'autre côté de la fente de la section de tuyau, **caractérisé en ce que** la couche de polyéthylène (8) faisant face à la laine minérale du recouvrement (5) en revêtement en film d'aluminium (4) est amenée en état fondu et qu'un côté du ruban double face (7) ayant la même composition adhésive sur ses deux faces est fixé à ladite couche de polyéthylène (8) du recouvrement lorsque ladite couche est en état fondu.

7. Procédé selon la revendication 6, **caractérisé en ce que** la fixation est réalisée en comprimant le ruban (7) pour le fixer au recouvrement (5) en couche de polyéthylène (8) du revêtement en film d'aluminium au moment même où le revêtement en film d'aluminium (4) déjà fixé sur la section de tuyau en laine minérale est coupé à l'extrémité qui forme ledit recouvrement en revêtement de film d'aluminium de la section de tuyau en laine minérale et où la couche de polyéthylène présente sur ce dernier est fondue.
